(19) Europäisches Patentamt
European Patent Office
Office européen des brevets

(11) Publication number: **0 305 833 B1**

(12) **EUROPEAN PATENT SPECIFICATION**

(45) Date of publication of patent specification: **30.12.92**

(51) Int. Cl.$^5$: **C08F 8/42**

(21) Application number: **88113581.8**

(22) Date of filing: **20.08.88**

(54) **Poly (vinyl alcohol) polymers with organo-linked pendant silanes having reactable alkoxy and/or hydroxy groups.**

(30) Priority: **28.08.87 US 90640**

(43) Date of publication of application:
**08.03.89 Bulletin 89/10**

(45) Publication of the grant of the patent:
**30.12.92 Bulletin 92/53**

(84) Designated Contracting States:
**BE CH DE FR GB IT LI NL**

(56) References cited:
**EP-A- 0 182 924**
**US-A- 3 703 499**
**US-A- 3 959 242**
**US-A- 4 491 650**

**PATENT ABSTRACTS OF JAPAN, vol. 10, no. 287 (C-375)[2343], 30th September 1986**

(73) Proprietor: **PPG INDUSTRIES, INC.**
**One PPG Place**
**Pittsburgh Pennsylvania 15272(US)**

(72) Inventor: **Gaa, Peter Charles**
**1248 Hazlett Road**
**Pitssburgh, Pennsylvania 15237(US)**
Inventor: **Lawton, Ernest Linwood**
**4107 Lee Manor Drive**
**Allison Park, Pennsylvania 15101(US)**

(74) Representative: **Sternagel, Hans-Günther, Dr. et al**
**Patentanwälte Dr. Michael Hann Dr. H.-G. Sternagel Sander Aue 30**
**W-5060 Bergisch Gladbach 2(DE)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to an aqueous mixture of an ungelled interaction product of the poly(vinyl alcohol) polymer and reactable organosilanes having alkoxy and/or hydroxyl groups.

Polymers with pendant hydroxyl-groups such as starch and poly(vinyl alcohol) form films that are useful in coating substrates having hydroxyl-containing surfaces. The films of these polymers vary from the rather harsh and brittle discontinuous film of starch to the tougher, more cohesive film of the poly(vinyl alcohol). Film coatings of these polymers form on substrates such as glass and metal oxides when these polymers are deposited on the substrate from solutions, dispersions and emulsions. Since the poly(vinyl alcohols) and some starches are water soluble, aqueous solutions of these polymers permit the utilization of the indigenous advantages of water versus organic solvents. These include ease in handling, greater environmental acceptability and facile and safe use, especially in the presence of materials at elevated temperatures such as in the formation of glass and metal oxide substrates. In addition, the water solubility of these polymers has been used to an advantage in coating substrates where the coating is temporary and is removed in subsequent processing steps in fabrication of products. The snag in the fabric of contented and advantageous usage of these polymers occurs when it is desired to have a film or coating that is more tenacious or that has better adhesive affinity to inorganic oxide surfaces. This is especially the case when the coated substrate is used in a moist environment.

U.S. Patent 3,959,242 is directed to a silane grafted poly(vinyl alcohol) which is prepared in an organic solvent by incrementally reacting a particular amount of silane with the poly(vinyl alcohol). The organic solvent is a solvent for the silane and essentially a non-solvent for the poly(vinyl alcohol) and the silane grafted polymer. Once formed, the grafted polymer can be applied to a substrate from a solvent solution.

U.S. Patent 4,491,650 is directed to an acrylic resin having pendant hydrolyzable alkoxysilane groups prepared by reacting a poly(meth)acrylate polymer having pendant hydroxyl groups thereon with an isocyanato functional alkoxysilane having 1 to 3 hydrolyzable alkoxy groups on the silicon atom. The resin can be used for coating various substrates.

The object of the present invention is to provide an ungelled polymeric formulation of poly(vinyl alcohol), carbohydrates or derivatives thereof that results in films that are more tenacious or that have improved adhesive affinity to inorganic substrates.

### Summary of the Invention

The present invention involves aqueous formulations, films and coatings therefrom and coated hydroxyl-containing surfaces of interaction polymers having one or more pendant substituents that result from the reaction of pendant hydroxyl groups with the isocyanato-functionality or ester-functionality of a reactable organosilane or mixture thereof. In the case where the polymer is poly(vinyl alcohol) the silane can also be epoxy-containing organosilane. The reactable organosilanes include alkoxy, hydroxy and/or acryloxy silanes and mixtures thereof.

The interaction polymeric material which is ungelled and has reactable alkoxy, aryloxy, and/or hydroxy groups generally has a structure such as:

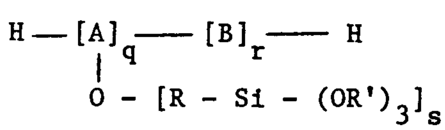

(Formula 1)

where: A is selected from a repeating unit moieties of $\{CH - CH_2\}$ found in poly(vinyl alcohol) and repeating units having the saccharose grouping, i.e.,

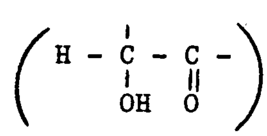

or its first reaction product as found in water-soluble carbohydrates including water soluble disaccharides and polysaccharides.

In formula 1 the moiety B is selected from repeating units of poly(vinyl acetate) and/or poly(vinyl

alcohol) or from repeating units of water-soluble carbohydrates; and

R is selected from the linkage

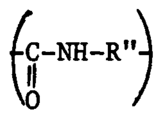 or 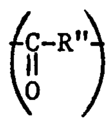 ,

when A is $\{CH-CH_2\}$ then R can also be the linkage

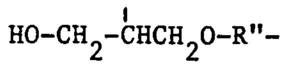

and

R′ is hydrogen and/or alkoxy groups having 1 to 5 carbon atoms, and

R″ is an alkyl having 1 to 5 carbon atoms or an aryl group and

wherein q, r and s are integers with q on average ranging from 1 to 3,000 and r on average is at least equal to the integer value of q for a molecular species of the interaction polymer, and s is 1 when A is the $\{CH-CH_2\}$ moiety and 1 to 3 when A is a repeating unit having a saccharose grouping or its first reaction product.

Formula 1 is depicted as a specific molecule but in actuality, it is more an average molecule in the interaction polymer formulation. Some molecules, although a small minority may not, have any silylation and the amount of silylation will vary from molecule to molecule of the interaction polymer.

The ungelled resinous interaction product is formed by intimately contacting the reactable organosilane or mixture thereof, with the polyhydroxyl-containing polymer that is a poly(vinyl alcohol), and/or carbohydrates and/or copolymer of vinyl alcohol and vinyl acetate or mixtures and blends thereof. The polyhydroxyl-containing polymer is present in an aqueous solution in an amount of about 5 to about 40 weight percent. The temperature of contacting can range from ambient to an elevated temperature that is less than 100 °C or the gelation temperature of the carbohydrate. Also, for long term storage the pH can be adjusted to a range of up to about 4 or 9 or greater. The contacting can be performed with or without the presence of a catalyst. The contacting is carried out with continuous agitation or turbulence of the solution. The contacting time can range from about 1 hour to 24 hours or more. The pressure for the contacting can range from subatmospheric pressure to super atmospheric pressures.

Film formation of the interaction polymeric product occurs by placing an effective film forming amount of the aqueous mixture with the interaction product on an appropriate surface and evaporating the moisture to form the film. Coatings are formed in a similar manner except the surface to which they are applied is a hydroxylated surface such as glass or metal oxides. The film or coating can have a slight amount of crosslinking of the interaction product.

## Brief Description of the Drawings

Figure 1 is a comparison of infrared spectrum curves of the interaction polymeric product of the present invention that is a silylated poly(vinyl alcohol) interaction product as curve A and poly(vinyl alcohol) as curve B.

Figure 2 is a plot of loss modulus versus temperature to show dynamic mechanical testing results of films of the interaction product (curve A), poly(vinyl alcohol) (curve B), and poly(vinyl alcohol)-ethylene glycol (curve C).

Figure 3 is a plot of storage modulus versus temperature to show dynamic mechanical testing results of films of the interaction product of the invention curve A versus poly(vinyl alcohol), curve B, and versus poly-(vinyl alcohol-ethylene glycol), curve C.

Figures 4 and 5 show the effect of silylation in the interaction product (Curve A) versus polyvinylalcohol (Curve B) when the films are coatings on glass fiber strand yarn by showing the effect on revolutions to fray yarn and tensile strength to break for the yarn, respectively.

## Detailed Description of the Invention and Preferred Embodiment

The polyhydroxyl-containing or polyhydroxylated polymer (both terms are used synonymously herein)

used in the present invention has a plurality of pendant hydroxyl groups with the pendant hydroxyl groups being the predominant pendant constituent on a number average basis. The polymer is selected from poly-(vinyl alcohol) and copolymers thereof where the vinyl alcohol moieties are the predominant repeating units (mer or moiety) and from water-soluble carbohydrates.

The poly(vinyl alcohol) can be prepared by any method known to those skilled in the polyvinyl alcohol technology and art. The poly(vinyl alcohol) may have a low, medium or high molecular weight which ranges from about 22,000 to greater than 105,000 weight average molecular weight. The poly(vinyl alcohol) can be fully or partially hydrolyzed from poly(vinyl acetate) to a sufficient degree to be water soluble, which is generally around at least 50 percent hydrolyzation. Also, mixtures of various molecular weight and hydrolyzed poly(vinyl alcohols) can be used. The poly(vinyl alcohol) can be formed from poly(vinyl acetate) by hydrolysis or ester interchange reactions, and such a starting material is polymerized in a manner known to those skilled in the art to approach the desired molecular weight of the poly(vinyl alcohol).

The poly(vinyl acetate) used as a starting material to produce the poly(vinyl alcohol) should not be such that the resulting poly(vinyl alcohol) has a high degree of crystallinity. With the increasing degrees of crystallinity, the poly(vinyl alcohol) becomes less water soluble and preferably the water-soluble poly(vinyl alcohol) is utilized as the reactant for the interaction product.

The solid poly(vinyl alcohol) with a percent of hydrolysis in the range of about 87 to about 89 percent and with not too high a degree of polymerization, will be easily soluble in water. For the poly(vinyl alcohol) having a higher degree of polymerization or a higher percentage of hydrolysis, the polymer can be prepared into an aqueous emulsion or dispersion by any techniques known to those skilled in the art. For example, a fully hydrolyzed poly(vinyl alcohol) that is one having about 98 to about 98.8 percent hydrolyzation is soluble only in hot to boiling water. If the fully hydrolyzed poly(vinyl alcohol) is to be combined with water at room temperature, an emulsion or dispersion of the polymer will have to be used. In forming an oil-in-water emulsion of the poly(vinyl alcohol), such solvents as acetone or normal propanol are useful in improving water stability. When the partially hydrolyzed poly(vinyl acetate) is used, the water solution of the poly(vinyl alcohol) can be prepared at room temperature and need not be in the form of an emulsion or dispersion, unless higher amounts of poly(vinyl alcohol) are to be present in the solution and water would be a minor component. Generally, the poly(vinyl alcohol) will not dissolve in cold water, but it can be dissolved in warm or hot water and cooled with agitation so it does not precipitate. The presence of some residual acetate groups on the poly(vinyl alcohol), like those present where the degree of hydrolysis is around 87-89 percent, renders the poly(vinyl alcohol) more soluble in water. But with further increasing of the number of acetate groups on the poly(vinyl alcohol), the solubility in water of the much less hydrolyzed polymer decreases. For example, poly(vinyl alcohol) with 30 mole percent acetate (50 percent hydrolyzed) is soluble only in a water-alcohol mixture.

A nonexclusive example of a useful poly(vinyl alcohol) is a low molecular weight poly(vinyl alcohol) having a weight average molecular weight from about 25,000 to about 35,000 with 1 percent residual acetate groups and less than 5 percent methyl methacrylate comonomer present to flexibilize the polymer. An example of a commercially available poly(vinyl alcohol) that can be used is Elvanol T-66 poly(vinyl alcohol) for the low molecular weight type which is available from E. I. duPont de Nemours Co. A medium molecular weight type of poly(vinyl alcohol) that is 87-89 percent hydrolyzed is Vinol WS 53 or 523 material, which is available from Air Products and Chemicals, Inc. This material has 11 to 13 percent residual acetate moieties and a molecular weight in the range of 77,000 to 79,000 number average molecular weight, (Mn). Another useful poly(vinyl alcohol) is the Vinol WS-51 or 205 material from Air Products Co. This material has a molecular weight of up to around 30,000 weight average molecular weight, (Mw), and a residual acetate level of around 11 to around 13 percent.

Nonexclusive examples of poly(vinyl alcohol) copolymers that can be used include copolymers with vinyl acetate, unsaturated aliphatic dicarboxylic acid, dialkyl esters, acrylic acid alkyl esters and vinyl alkyl ethers, crotonic acid and olefin comonomers, maleic acid monoalkyl ester, lactone rings, methyl methacrylate and the like.

The vinyl esters that are useful for hydrolyzation into the poly(vinyl alcohol) polymer include: vinyl acetate, vinyl propionate, vinyl formate, etc., although vinyl acetate is normally employed. Also, the poly-(vinyl alcohol) resin can be produced from itaconic acid which is substantially free of its ester and anhydride forms on the one hand, and vinyl acetate as a typical species of vinyl ester on the other hand through free radical polymerization in an alcoholic solvent. These polymers are hydrolyzed under acid or alkaline conditions. Alkaline conditions are created by the use of an aqueous solution of alkali metal hydroxide and alcoholysis with a basic catalyst. Also useful is the commercial methanolysis approach with the use of sodium ethoxide or sodium hydroxide. Acid hydrolysis is not preferred since resulting carboxyl groups and side chains are liable to form lactone rings (intramolecular esters) which can interfere with the solubility of

the poly(vinyl alcohol) resin.

Useful carbohydrates employed as the polyhydroxylated polymer are those that are water soluble or can be made water soluble by heating to a non-gellation condition in warm, hot or boiling water. This includes both native starches like those originating either from corn or grains or from tubers or root crops and starch derivatives. Nonexclusive examples of native starches include: wheat starch, corn starch, potato starch and even rice starch. Starch derivatives are chiefly ester or ether derivatives of the native starches as well as oxidized starches and cationized starches. Non-exclusive examples of other useable water-soluble carbohydrates include: alginates; hydroxyalkylcellulose; carrageenan; carboxyalkylcellulose; natural gums like guar, agar arabic ghatti, karaya, tragacanth, locust bean, tamarind and xanthan; and pectins and etherified or esterified or alkali metal or ammonium salts thereof.

In preparing the polyhydroxylated polymer whether a poly(vinyl alcohol) or copolymer thereof or carbohydrate, the solution has a weight percent solids of the polyhydroxylated polymer in the range of about 5 to about 30 weight percent. For the poly(vinyl alcohol) the degree of polymerization is usually in the range of from around 500 to 2500 so that the viscosity is in the range of about 5 to about 200 centipoise. This results in a stirable solution of the polyhydroxylated polymer for contacting with the reactable organosilane. If necessary, viscosity stabilizing agents can be added to the poly(vinyl alcohol) solution. Lower amounts of the poly(vinyl alcohol) may not form a film on certain surfaces and higher amounts may produce solubility problems. For the starch, as mentioned previously, any of the starches having only limited water solubility can be added to hot or boiling water to obtain the aqueous solution having about 5 to 30 weight percent solids of the starch.

The reactable organosilane means those organosilanes that have at least one hydrolyzed or hydrolyzable group and have the general formula of:

$R'' - Si - (OR')_3$ (Formula 2)

where $R'$ is hydrogen and/or alkoxy groups having 1 to 5 carbon atoms; and

$R''$ is an isocyanato alkyl, isocyanatoaryl or isocyanato-aralkyl or alkyl or aryl ester group, where the alkyl has from 1 to 5 carbon atoms or one of the aforementioned materials in capped form; and $R''$ can be a glycidoxy alkyl, glycidoxyaryl or glycidoxyaralkyl group when the polyhydroxylated polymer is poly(vinyl alcohol) or a copolymer thereof.

A suitable example of an isocyanato alkyl silane is that available from Union Carbide Corp. under the trade designation Y-9030 which has the structural formula of:

$O = C = N(CH_2)_3Si(OC_2H_5)_3$ . (Formula 3)

This material is a clear liquid and is greater than 95 percent active material and has a specific gravity at 25 °C/25 °C of 0.99 and has an index of refraction, $N_D$25 °C of 1.419 with a color of water-white to light amber. This material is soluble in benzene, toluene, hexane, acetone, diethylcarbitol®, dimethylformamide, cellosolve® acetate. The material is stable when stored in the absence of water, alcohol, carboxylic acids, soluble heavy metals, phosphorous compounds and strong bases. Another suitable example is the material available from Union Carbide Corp. under the trade designation Y-9078 having the formula:

$$C_2H_5O\overset{\displaystyle O}{\overset{\|}{C}}NH(CH_2)_3Si(OC2H5)_3 \quad . \qquad \text{(Formula 4)}$$

When this latter material is used, longer reaction times are involved in intimately contacting the polyhydroxylated polymer so that the ethoxyl group can decompose off of the silane to result in the isocyanate functional group capable of reacting with alcohols. A suitable example of the glycidoxy material is glycidoxypropyl trimethoxysilane available under the trade designation A-187 from Union Carbide Corp. An additional epoxy-containing organosilane that is useful is that available under the trade designation A-186 and that is a beta-(3,4-epoxycyclohexyl)-ethyl- trimethoxysilane. The ester-functional organosilane is also useful and has the formula:

$(C_2H_5O-\underset{\underset{O}{\|}}{C}-(CH_2)_3\quad Si(OC_2H_5)_3$ (Formula 5)

and is available from Union Carbide under the trade designation Y-9478.

Generally the presence of water in the reaction of an isocyanate-functional material and an alcohol-functional material causes undesirable side reactions. An example of these undesirable side reactions is the water combining with the isocyanate to give a carbamic acid at room temperature which then decarboxylates to produce a primary amine functional material and carbon dioxide. Subsequently, the primary amine can react with another isocyanate functional material to produce allophanates and biuret. The reaction of water with the isocyanate occurs according to the stoichiometry of a higher molecular weight isocyanate, for example, prepolymers having molecular weights of about 5000 with only 0.24 grams of water for 100 grams of prepolymer to react to obtain a higher crosslinked polymer. Conducting the reaction of an isocyanate moiety with an alcohol moiety to get a urethane linked product in an aqueous medium involves careful control of the condition of the reactants such as concentration and pH of the medium to favor the rate of reaction to the desired product having little or no crosslinking versus the highly crosslinked or nonlinear product.

The conditions for the reaction to produce a polyhydroxylated polymer with one or more organo-linked pendant silanes with reactable alkoxy or hydroxy moieties involves intimately contacting the reactable organosilane with the diluted aqueous solution of the polyhydroxylated polymer. The intimate contacting occurs with or without the presence of a catalyst and at a pH less than or equal to about 4 or greater than or equal to about 9, preferably a pH of about 3 or less, and at a temperature in the range from around ambient to an elevated temperature of 100 ° C or less, preferably a temperature of about ambient to 40 ° C, and at a pressure of subatmospheric to superatmospheric, preferably atmospheric. The reactants can be contacted in any manner as long as the diluted polyhydroxylated polymer is used, but preferably the silane is added dropwise to the dilute polyhydroxylated polymer in aqueous solution over a period of 15 to 60 minutes. Constant agitation accompanies the intimate mixing of the reactants. At the reaction temperature of ambient temperatures including room temperature, the reaction time is in the range of about 24 hours, although the catalyzed reaction at room temperature can occur in a shorter period of time. In addition, some plasticizing materials may be present with the polyhydroxylated polymer such as polyethylene glycols for the poly(vinyl alcohol). The amount of the reactable organosilane intimately contacted with the polyhydroxylated polymer is an effective amount to result in at least one and up to less than about 50 percent of the number of pendant hydroxyl moieties on the polyhydroxylated polymer to produce the organo-linked silanes. Preferably the amount assures about 2 mole percent of the reactable organosilane is grafted to the polyhydroxylated polymer. This means that for every 98 repeating units of polyhydroxylated polymer like poly(vinyl alcohol), there are two mole percent of the isocyanato organosilane. Amounts of reactable organosilanes that result in more than 50 percent conversion of hydroxyl groups can produce gelation. The pH can be controlled with the addition of a suitable acid or base respectively for the pH being less than 4 or greater than 9. Preferably, the acid is a glacial acidic acid added in an amount to bring the pH to around 3.

The ungelled resinous interaction product may be present in the aqueous solution with some unreacted polyhydroxylated polymer and with some reactable organo functional silane that may be unreacted or reacted through another reaction mechanism. Generally, the percent yield of the interaction product can be up to about ninety percent or more. Also, in the interaction product itself, not all of the hydroxyl groups pendant from the polyhydroxylated polymer are reacted to form the organo-linkage reactable organofunctional silane. If more than about 50 percent of the number of hydroxyl groups are reacted, gelation of the interaction product may occur. For instance, the interaction product can have a formula for poly(vinyl alcohol) as the polyhydroxylated polymer such as:

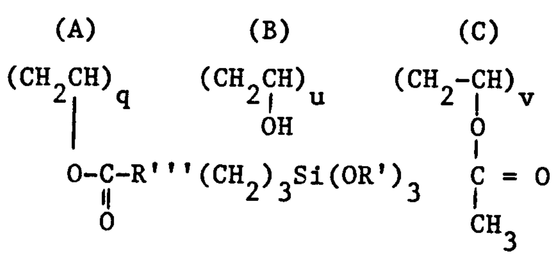

(Formula 6)

where $R'''$ is:

$$-NH-; \quad -\underset{\displaystyle CH_2OH}{\underset{|}{CH}}-CH_2O-;$$

and x is 1 or 0;
where $R'$ is a lower alkyl group having 1 to 5 carbon atoms and/or hydrogen;
where "q", "u" and "v" are integers and the numerical value of "q" is less than or equal to and preferably up to only one-half of the numerical value of ("u" + "v") and "v" is an integer reflecting the remainder percentage between 100% and the degree of hydrolyzation, and "u" is an integer reflecting the unreacted hydroxyl group. In Formula 6 with respective positions of the three moieties A, B and C are for illustrative purposes only, and their positions relative to each other in the interaction product is completely random, although known methods of producing block copolymers can be used.

The organo-linkage of the aforementioned interaction product is similar to that when water-soluble carbohydrates or water-soluble carbohydrate derivatives are the poly-hydroxylated polymer. An exception is that up to three organo-linkages can occur per mer of carbohydrate.

When catalyzing the reaction from the intimate contact of the reactants, suitable catalysts for the acid catalysis include: the protic acids in general and acetic acid is particularly suitable. The amount of catalyst is an effective catalytic amount to accelerate the reaction to a desired degree especially when lower reaction temperatures are used or reaction equipment is used that doesn't provide for intimate contacting like that provided by high shear stirring. For the basic catalysis, nonexclusive examples of the catalyst include, in general, any tertiary amine and in particular triethylamine used in an effective catalytic amount.

The aqueous formulation of the interaction product can be applied to substrates to form a film or coating by any method known to those skilled in the art to the myriad types of substrates. For instance, useful application techniques include: brushing, dipping, spraying and flow or roll coating and like techniques. The coating can interact with the substrate by covalent bonding, ionic bonding, hydrogen bonding, and/or Van der Waal bonding through the siliconate anion for the basic solution or the silanol groups of the interaction product. Hydrolyzation is accomplished by increasing the pH of the aqueous solution prior to or during application to the substrate. Nonexclusive examples of such substrates include: leather, wood, paper of fabric stock, clay coated print sheet stock, plastics, inorganic oxides such as glass, aluminum, and steel, and any other inorganic or organic solid material which possess either oxygen, chemisorbed or covalently bonded, or hydroxyl (bonded or free) at the substrates initial or exposed surface and includes any materials which can be treated by coupling agents known in the prior art. The inorganic oxide material can be in any form including particles of regular or irregular shape such as spherical, individual fibers such as glass fibers, woven fiber mats or fabric or continuous surfaces such as sheets, films, slabs and formed shapes. Specific illustrations of suitably employed inorganic oxide materials are, for example, brass (with an oxidized surface), aluminum metal (oxidized at its surface), iron or steel (oxidized at its surface), alumina, aluminum trihydrate, siliceous materials such as fume silica, hydrated silica (precipitated silica), silica aerogels, silica xerogels, aluminum silicates, calcium, magnesium silicates, asbestos, glass fibers, silica fibers, clays, molecular sieves, wollastonite, calcium carbonate, carbon black (including lamp black) titanium dioxide (including titanium dioxide which contains hydrochloric soluble alumina and/or silica, calcium sulfate, magnesium sulfate, calcium carbonate containing a silica coating or agglomerated to silica and the like.

The coating composition of the present invention, which is a polymeric adhesion promoter, can be used in essentially the same manner as coupling agents known in the prior art. It is believed without limiting the invention that the functional mechanism of the polymeric adhesion promoter is similar to the prior art monomeric coupling agents. The polymeric adhesion promoter can be supplied to the surface of the inorganic oxide or organic material prior to contacting with any additional polymeric materials to be reinforced or augmented with the inorganic oxide or organic material. Also, the coating composition can be applied as a primer coating to the surface of inorganic oxides in the form of the aqueous emulsion.

Once the interaction product is applied, usually in an aqueous mixture, curing occurs through drying at ambient or elevated temperatures. The drying reduces the moisture content, removes volatiles and possibly induces some crosslinking. Lower elevated temperature curing is satisfactory for the interaction compositions of this present invention. The use of ambient temperature curing requires a cure period of up to two days to achieve a coating with fully developed properties. It should be noted, though, when cured at ambient temperatures, the coating is dry to the touch after only a few hours. A more fully developed cured

in the coating can be achieved by applying heat, with less than about 150 ° C being sufficient.

It is believed, but the invention is not limited by this belief, that in the cure by drying of the aqueous solution on a substrate improved adhesiveness of the coating to a substrate is achieved by the silanol bonding to the hydroxyl-containing surface alone or along with a minor degree of siloxane cross-linking of the silylated polyhydroxylated polymer.

Also the silylated polyhydroxylated polymer of the present invention can be used as a warp textile sizing which is applied to the fibers during their formation or as a secondary coating operation on nascent fibers or already sized fibers. An example of such textile fibers are glass fibers prepared from fiberizable glass compositions, for example, "E-Glass" compositions or "621-glass" compositions or low or free boron and/or fluorine derivatives thereof. The filament diameters of the glass fibers can be any diameters known to those skilled in the art, and the process of making the glass fibers can be any process known to those skilled in the art.

The warp glass fiber strand yarn is produced by attenuating the glass fibers from molten streams of glass from small orifices in a bushing containing molten glass. The glass fibers are then cooled to some degree and the forming size composition is applied to the glass fibers as they are drawn past an applicator, which can either be a belt or roll applicator or spray applicators. The size glass fibers are then gathered into one or more strands and wound onto a winder, which provides the force for attenuating the glass fibers from the bushing. The fibers are drawn from the bushing and wound onto a sleeve on the winder at a speed of about 1,200 to 1,800 meter per minute (about 4,000 to 6,000 feet per minute). The glass fiber strands are traditionally wound onto the forming package in nonparallel alignment to each other to facilitate the removal of the strands from the forming package. A plurality of the forming packages is dried to remove enough moisture so that the strand can be removed from the forming package. The forming packages are rewound onto bobbins with or without an imparted twist to the strand. The strand from the bobbins or from the forming package could undergo the bulking process such as described in U.S. Patent Nos. 3,672,947 and 3,730,137, which have been dedicated to the public, and 4,003,111 all of which are hereby incorporated by reference. A plurality of the bobbins of the glass fiber strand yarn or bobbins of the bulked yarn are beamed by winding many of the strands in parallel onto a beaming cylinder. The beams are available to supply warp yarn to a slashing operation for producing weavable warp yarn.

The glass fiber strand yarn can have the slashing size formulation applied to it after the yarn has been unwound from a beam on any conventional slashing machine such as a West Point Slasher available from West Point Foundry and Machine Company, P. O. Box 151, West Point, GA 31833 or a slashing machine available from Griffiths Foundry and Machine Company or slashing machines now or formerly available from Cocker Machine and Foundry Company. A dry split type slashing operation or wet split type slashing operation can be used.

In the slashing operation the yarn can be removed from one or more beams and passed into a size box in a slashing machine, where the size box can be either single or multiple size boxes. The slashing size solution is present in the box maintained at a temperature in the range of ambient or room temperature of about 20 ° C to an elevated temperature of about 90 ° C. The solids content of the slashing size is in the range of about 3 to about 25 weight percent and preferably about 8 to about 10 weight percent. After removal of excess size solution from the treated yarns by passage between squeeze rolls, the treated yarn is dried by contact with multiple drying cans heated to a temperature of about 100 ° to 150 ° C. The yarn coming from the heated cans are split by stationary rods, and wound as a weaving beam. This operation through the slashing machine is usually conducted at speeds of 10 to 100 meters per minute. In a wet slashing operation, the wet sized yarn are split the partially dried in a separated state on heated cans before being reassembled and completely dried on the conventional heated cans.

The dried slashing formulation present on the yarn is in an amount of add-on of about 1 to about 7 weight percent of the treated glass fiber strand yarn as determined by loss on ignition (LOI). Lower amounts of add-on do not adequately protect the wrap yarn in weaving the higher amounts for continuous yarns do not provide any additional benefits but only increase the requirements for removing the dried residue from the warp yarn once the weaving is completed. In the case of staple yarns, a higher add-on of the slashing or warp sizing composition can be used to assist in keeping the short fibers together. The preferred amount of add-on depends on the presence of any additional film forming polymers that are utilized and the type of cleaning equipment to be used. Some cleaning equipment have an upper limit for removal of size residue of about 4 weight percent.

In the preferred embodiment of the present invention the polyhydroxylated polymer is a poly(vinyl alcohol) available from Air Products under the trade designation Vinol 205 (formerly WS-51) with the partial hydrolyzation of around 87 to 89 percent. This powder material is added to a vessel having deionised water at a temperature of 25-80 ° C to produce a concentration to about 20 to 25 weight percent. The addition is

with constant vigorous stirring and at a slow enough speed to limit the formation of lumps. After addition, the stirrer is slowed to allow for removal of trapped air but still effectively mix the mixture. The reactable organosilane is preferably the isocyanato propyltriethoxysilane available as Y-9030 silane. An amount of this silane to provide up to two weight percent grafting of the silane onto the poly(vinyl alcohol) or up to two mole percent grafting or around fourteen weight percent of the silylated repeating Unit. After the silane addition, stirring of the mixture is for about one hour. The pH of the 1 percent solution is around 6 to 6.5. Sufficient reaction occurs after the amount of time to remove the aqueous mixture with the interaction product.

The aqueous solution with the interaction product is preferably applied to the glass fibers as a forming size, or component of a forming size or as a warp size.

EXAMPLE I

In a 189.27 liter (50 gallon) steamed-jacketed kettle, 53.92 liter (118.87 pounds or 14.24 gallons) of deionized water was added and brought to a temperature of 70°C. Over the course of an hour 17.02 kilogram (37.53 pounds) of poly(vinyl alcohol), Vinol WS-53, was slowly added to the warm water solution to result in a 23.3 percent solid solution which was milky white. Triethylamine catalyst (5.0 grams) was added to this solution and stirred for fifteen minutes. An amount of 1.69 kilograms (4.17 pounds) of isocyanato propyltriethoxysilane (Y-9030) was added dropwise with vigorous stirring over a 30 minute period. The filmy white solution was stirred for an additional hour at 78°C. Added to this mixture was 113 grams of glacial acetic acid dissolved in 116.8 liter of water at a temperature of 50°C. The solution was stirred until it cooled to 30°C and the solution was transferred to a 208 liter drum for storage. The solution was 10.1 percent solids, a pH of 3 and a viscosity of 0.205 pascal-second with a Brookfield No. 4 spindle at 30 rpm. An IR curve, performed in the typical fashion for films, of a cast film from this reaction mixture indicates the presence of a urethane group at 1650 and 1580 reciprocal centimeters, as shown in Figure 1. Also, a film was dissolved in deuterated dimethyl sulfoxide and a nuclear magnetic resonance spectrum was determined on a Varian EM 360 A spectrometer. The urethane NH signal at 2 delta was detected.

EXAMPLE 2A

To 100 grams of Vinol WS-53 poly(vinyl alcohol) (2.04 moles) and 400 milliliters of water (20 percent solution) at 80°C (pH 2.0) was added dropwise 24.1 grams (0.1 mole, 5 percent mole weight) of gammaglycidoxypropyltrimethoxysilane (A-187). The mixture was stirred for 24 hours at 80°C and the solution was diluted with 1004 milliliters of water to make a 7 percent solution. An IR and NMR sample was prepared by evaporating the water and the residue indicated approximately 3 percent silylation of the poly(vinyl alcohol).

EXAMPLE 2B

In a similar manner to Example 2A, 48.2 grams (0.2 mole, 10 percent mole weight) of the gammaglycidoxypropyltrimethoxysilane were added dropwise to the 20 percent solution of poly(vinyl alcohol) and the mixture was stirred for 24 hours at 80°C. An IR and NMR of the residue indicated 9 percent silylation of the poly(vinyl alcohol).

EXAMPLE 2C

A solution of the poly(vinyl alcohol) was prepared by adding 10 kilograms (204 moles) of the Vinol WS-53 to 42 liters of water and 900 milliliters of glacial acetic acid. To this mixture at 80°C there was added dropwise 2.411 kilograms (10.2 moles) of the gammaglycidoxypropyl- trimethoxysilane. The solution was stirred for 3 hours at 80°C and for 48 hours at 25°C.

EXAMPLE 3A

A solution of poly(vinyl alcohol) was prepared by adding 60 grams (1.22 moles) of Vinol WS-53 poly(vinyl alcohol) to 240 milliliters of water at 80°C to prepare the 25 percent solids solution. To this mixture there was added 50 microliters of normal tin butyl acetate. An amount of 16 grams (0.0647 moles; 5.3 mole percent) (26.6 weight percent) of isocyanato propyltriethoxysilane was added dropwise to the poly(vinyl alcohol) 25 percent solution with vigorous stirring. The mixture was stirred for 2 hours at 80°C and the

solution was diluted with 450 milliliters of water and stirred for one hour.

EXAMPLE 3B

Similar to Example 3A except only 6.0 grams (0.024 moles) (2 mole percent) 10 weight percent of the isocyanatopropyltriethoxysilane (Y-9030) were added to the 25 percent solid solution of the poly(vinyl alcohol).

EXAMPLE 4A

An amount of 3 grams of blocked urethane functional organosilane (Y-9078) were added to 270 milliliters of water and stirred for 10 minutes. An amount of 30 grams of the Vinol 51 was added to this mixture and stirred for 20 minutes. The solution was then refluxed for 2 hours.

EXAMPLE 4B

A solution of poly(vinyl alcohol) was prepared by adding 50 grams (1.136 moles) of Elvanol T-66 poly-(vinyl alcohol) to 200 grams of water. With stirring 5 grams (0.017 mole) 10 weight percent or 1.5 mole percent of blocked isocyanato organo functional silane were added dropwise to the 65°C solution and stirred for 20 minutes. To this solution there was added normal butyl tin acetate in an amount of 0.12 grams (0.34 millimoles (M mole), 2 mole percent compared to Y 9078) dropwise with stirring and the solution was stirred.

EXAMPLE 5A

An amount of 10.93kg poly(vinyl alcohol) under the trade designation Vinol 57 was slowly added to 34.5kg of deionized water at a temperature of 150°F (66°C) with constant agitation. The addition was complete in about 45 minutes to produce a 25 percent solid solution that was stirred for 3.5 hours. An amount of 0.930kg of isocyanato propyltriethoxysilane was added dropwise with moderate continuous agitation for 2 hours. After this time, the stirring rate was reduced to allow for breakage of air bubbles.

EXAMPLE 5B

A reaction was conducted in a similar manner to Example 5A except the amounts were: deionized water 60kg poly(vinyl alcohol), 19kg; isocyanato propyltriethoxysilane, 1kg. Also, after addition of the silane the mixture was stirred for only one hour. The resultant liquid had a viscosity with a No. 1 spindle at 3 rpm of 1980 centipoise and at 1.5 rpm of 2 pascal-second, and the liquid had a pale green color and a pH of 6.4.

EXAMPLE For Characterization of Silylated Products

The silylated poly(vinyl alcohol) was applied to glass fiber strand yarn as a warp sizing where the yarn had a construction of G-75 with a starch oil sizing and 0.7 Z twist using a single-end slasher as aforementioned. The application conditions were a 10 weight percent solid solution at 22 to 25°C a 68,950 pascal roll pressure, a 6 meter per minute yarn speed and 466°C drying oven which was a 0.61 meter tube furnace. The coated yarns were extracted in a soxhlett for 24 hours showing that the intimate mixing of the isocyanate organosilane and the poly(vinyl alcohol) produces silylation of the poly(vinyl alcohol) in the range of about 1 to 2 weight percent.

Also, yarn coated with poly(vinyl alcohol) without any silane and also yarn that was uncoated except for the starch oil sizing composition were submitted to the same extraction where the conditions included reflux of the solvent for 24 hours. Also, yarn coated with silylated poly(vinyl alcohol) where the silane was the capped isocyanato organosilane was submitted to a similar extraction. Table 1 shows the increased LOI (loss on ignition) retained on the glass fiber for the solvents water and dimethyl formamide (DMF).

TABLE I

| Extraction of (PVOH) Compounds From G-75 Yarn | | | |
|---|---|---|---|
| Coating | LOI | %LOI Retained ($H_2O$ Solvent) | % LOI Retained (DMF Solvent) |
| Y-9078/PVOH | 2.5 | 71* | 73* |
| Y-9030/PVOH | 2.7 | 89* | 86* |
| PVOH | 2.1 | 17* | 15* |
| Uncoated sized yarn control | 1.0 | 12 | 3 |

* Percentages corrected for loss of starch-oil size on glass fibers.

Example Film Properties

Films were cast in glass dishes from 8 weight percent solutions of the aqueous silylated Poly(vinyl alcohol). The films were air dried for 3 days and then cured at 121 ° C (250 ° F) for 2 minutes. The tensile properties of the films were compared for the unsilylated poly(vinyl alcohol), poly(vinyl alcohol) with ethylene glycol and two versions of the silylated poly(vinyl alcohol) using the isocyanato organofunctional-silane or its capped derivative. The comparison is shown in Table 2. The tensile properties of Table 2 indicated that the silylated poly(vinyl alcohol) film exhibits flexibility similar to that of poly(vinyl alcohol) plasticized with about 10 weight percent ethylene glycol.

TABLE 2

| COMPARISON OF TENSILE PROPERTIES | | | | |
|---|---|---|---|---|
| Property | Control PVOH | Control PVOH With 10% Ethylene Glycol | Silylated PVOH Y-9030 | Silylated PVOH Y-9078 |
| Elongation at Yield (%) | 8 | 13 | * | 8 |
| Strength at Yield Kilopascal (PSI) | 37,183 (5393) | 14,596 (2117) | * | 29,648 (4300) |
| Elongation at Failure (%) | 137 | 231 | 311 | 43 |
| Strength at Failure Kilopascal (psi) | 5592<br>91,376 (13,253) | 4665<br>106,179 (15,441) | 1228<br>34,722 (5036) | 4777<br>47,098 (6831) |

* No distinct yield
( ) Corrected for cross-sectional area at break

The film produced from the silylated poly(vinyl alcohol) utilizing the capped isocyanato silane was more brittle. Figure 2 and 3 compare the dynamic mechanical properties. Figure 2 shows the storage modules below the glass transition region is slightly higher for the silylated film compared to the unmodified film. Figure 3 shows the glass transition temperature as reflected by loss modules is depressed by approximately 6 ° C by silation of the poly(vinyl alcohol).

A Duplan tester was used to rank abrasion resistance of slashed glass fiber yarn produced in accordance with the previous example. The solution concentration of the slashing size was varied to obtain a range of LOIs. Figure 4 illustrates a two to threefold improvement in abrasion resistance of the silylated poly(vinyl alcohol) over unsilylated poly(vinyl alcohol). Also, the silylation in the poly(vinyl alcohol) increased the breaking strength of the yarn when the coatings are compared at equal LOIs.

The foregoing has described the silylated polyhydroxylated polymers of the present invention as mixtures, films and coatings for various substrates.

## Claims

**1.** An aqueous mixture of an ungelled interaction product comprising

A. a polyhydroxylated polymer having the hydroxylation present as a plurality of pendant constituents, wherein the hydroxyl pendant constituents are the predominant pendant constituents, selected from the group consisting of poly(vinyl alcohol) and copolymers thereof and watersoluble carbohydrates and

B. a reactable organosilane having up to 3 groups selected from alkoxy, aryloxy, hydroxy or mixtures thereof attached to the silane and having reactable organo groups selected from the group consisting of isocyanato alkyl , isocyanato aryl , isocyanato aralkyl, where the isocyanato groups are capped or uncapped, ester-containing alkyl, aryl, aralkyl and, where the polyhydroxylated polymer is poly(vinyl alkohol) or a copolymer thereof, glycidoxy alkyl, glycidoxy aryl and glycidoxy aralkyl,

said aqueous mixture of said interaction product being formed by intimately contacting the polyhydroxylated polymer and the reactable organosilane, the polyhydroxylated polymer being applied as an aqeous solution, emulsion or dispersion containing about 5 to about 40 % by weight thereof and the reactable organosilane being used in an amount such that at least one and up to less than about 50 % of the number of pendant hydroxyl constituents on the polyhydroxylated polymer are reacted, and the intimate contacting being performed at a pH of up to about 4 or 9 or greater and at a temperature ranging from ambient to elevated temperatures less than about 100 ° C to produce an aqueous mixture of the ungelled interaction product.

**2.** The product of claim 1 wherein the pH is around 3.

**3.** The product of claims 1 or 2 wherein a protic acid catalyst is used in intimately contacting the polyhydroxylated polymer and the reactable organosilane where the catalyst is present in an effective catalytic amount.

**4.** The product of claim 3 wherein acetic acid is the catalyst.

**5.** The product of claim 1 wherein a tertiary amine catalyst is used in an effective catalytic amount in intimately contacting the polyhydroxylated polmer and the reactable organosilane.

**6.** The product of any of claims 1 to 5 wherein the polyhydroxylated polymer is poly(vinyl alcohol) polymer or copolymer thereof and the reactable organosilane is isocyanatoalkyl trialkoxysilane and the interaction product has in addition to pendant hydroxyl and acetate moieties at least one moiety having the formula :

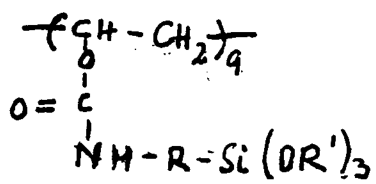

wherein R is an alkyl group, R' is an alkyl, hydrogen or mixture thereof between the three groups, and q is an integer from 1 to 3,000.

**7.** Product of any of claims 1 to 5 wherein the polyhydroxylated polymer is poly(vinyl alcohol) or copolymer thereof and the reactable organosilane is glycidoxyalkyl trialkoxysilane and the interaction product has in addition to pendant hydroxyl and acetate moieties at least one moiety having thr formula :

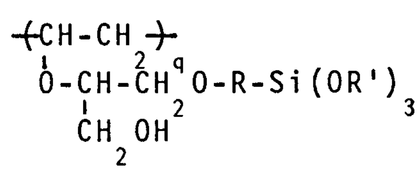

wherein R is an alkyl group, R' is an alkyl, hydrogen or mixture thereof between the three groups, and q is an integer from 1 to 3,000.

**8.** Product of any of claims 1 to 5 wherein the polyhydroxylated polymer is poly(vinyl alcohol) or copolymer thereof and the reactable organosilane is ethoxyesteralkyl trialkoxysilane and the interaction product has in addition to the pendant hydroxyl and acetate moieties at least one moiety having the formula :

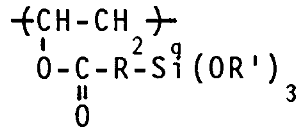

wherein R is an alkyl group, R' is an alkyl, hydrogen or mixture thereof between the three groups, and q is an integer of from 1 to 3,000.

**9.** Product of any of claims 1 to 8 wherein the polyhydroxylated polymer is poly(vinyl alcohol) or copolymer thereof having a percent hydrolyzation of at least 50 percent and the interaction product has residual pendant acetate groups from the starting polyhydroxylated polymer.

**10.** Product of any of claims 1 to 9 wherein the polyhydroxylated polymer is poly(vinyl alcohol) or copolymer thereof and the interaction product has on a number basis of pendant groups less than around 50 percent of pendant organolinked silanes with reactable alkoxy and/or hydroxy groups.

**11.** Product of claim 10 wherein the percentage of pendant organo-linked silane groups present is up to 2 mole percent.

**12.** Product of any of claims 1 to 11 wherein the interaction product has the infrared spectra of Figure 1, curve A.

**13.** Product of any of claims 1 to 12 wherein the temperature range is ambient to 80 ° C.

**14.** Product of any of claims 1 to 5 wherein the water soluble carbohydrate is selected from the group consisting of starch and its etherified, esterified oxidized and cationized derivatives.

**15.** Use of an aqueous mixture of an ungelled interaction product of any of claims 1 to 14 to treat hydroxyl containing substrates.

**16.** Hydroxyl-containing substrates coated with the dry residue of an aqueous mixture of an ungelled interaction product of any of claims 1 to 14.

**17.** Method of producing an aqueous mixture of an ungelled interaction product of polyhydroxylated polymer and reactable organosilane comprising intimately contacting

A. a polyhydroxylated polymer having the hydroxylation present as a plurality of pendant constituents, wherein the hydroxyl pendant constituents are the predominant pendant constituents, selected from the group consisting of poly(vinyl alcohol), copolymers thereof and watersoluble carbohydrates, and

B. a reactable organosilane having up to 3 groups selected from alkoxy, aryloxy, hydroxy or mixtures thereof attached to the silane and having reactable organo groups selected from the group consisting of isocyanato alkyl, isocyanato aryl, isocyanato aralkyl, where the isocyanato groups are capped or uncapped, ester-containing alkyl, aryl, aralkyl and, where the polhydroxylated polymer is poly(vinyl alcohol) or a copolymer thereof, glycidoxy alkyl, gycidoxy aryl and glycidoxy aralkyl,

the polyhydroxylated polymer being applied as an aqueous solution, emulsion or dispersion containing about 5 to about 40 % by weight thereof and the reactable organosilane being used in an amount such that at least one and up to less than about 50 % of the number of pendant hydroxyl constituents on the polyhydroxylated polymer are reacted, and the intimate contacting being performed at a pH of up to about 4 or 9 or greater and at a temperature ranging from ambient to elevated temperatures less than about 100 ° C to produce an aqueous mixture of the ungelled interaction product.

**18.** Method of claim 17 which includes applying the aqueous mixture of the ungelled interaction product to

a hydroxyl-containing substrate and reducing the moisture content of the mixture to form a coating.

**Patentansprüche**

1. Wässeriges Gemisch eines nicht gelierten Reaktionsproduktes enthaltend
   A. ein Polymeres mit mehreren Hydroxylgruppen, die als eine Vielzahl von Substituenten vorhanden und die die vorwiegend vorhandenen Substituenten sind, ausgewählt aus der Gruppe bestehend aus Polyvinylalkohol , Copolymeren des Vinylalkohols und wasserlöslichen Kohlenhydraten, und
   B. ein reaktionsfähiges Organosilan mit bis zu 3 Substituenten, ausgewählt aus der Gruppe bestehend aus Isocyanatoalkyl-, Isocyanatoaryl- und Isocyanatoaralkyl-Resten, wobei die Isocyanatgruppen jeweils verkappt oder unverkappt sind, aus Estergruppen enthaltenden Alkyl-, Aryl- und Aralkylresten sowie, sofern das Polymere mit mehreren Hydroxylgruppen Polyvinylalkohol oder ein Copolymeres des Vinylalkohols ist, aus Glycidoxyalkyl-, Glycidoxyaryl- und Glycidoxyaralkyl-Resten,
   wobei das genannte wässerige Gemisch des genannten Reaktionsproduktes durch inniges in Berührung bringen des Polymeren mit mehreren Hydroxylgruppen und des reaktionsfähigen Silans entsteht, das Polymere mit mehreren Hydroxylgruppen als wässerige Lösung, Emulsion oder Dispersion mit etwa 5 bis etwa 40 Gewichtsprozent Feststoffgehalt eingesetzt wird, das reaktionsfähige Organosilan in einer solchen Menge verwendet wird, daß wenigstens eine und bis zu 50% der substituierenden Hydroxylgruppen des Polymeren mit mehreren Hydroxylgruppen umgesetzt werden und wobei das innige miteinander in Berührung bringen bei einem pH-Wert von bis Zu etwa 4 bis 9 oder höher und bei einer Temperatur zwischen Raumtemperatur und erhöhten Temperaturen von weniger als etwa 100 ° C stattfindet, so daß eine wässerige Mischung des nicht gelierten Reaktionsproduktes entsteht.

2. Produkt nach Anspruch 1, wobei der pH-Wert etwa 3 beträgt.

3. Produkt nach den Ansprüchen 1 oder 2, wobei bei dem innigen miteinander in Berührung bringen des Polymeren mit mehreren Hydroxylgruppen und des reaktionsfähigen Organosilans ein Protonensäurekatalysator in einer katalytisch wirksamen Menge mitverwendet wird.

4. Produkt nach Anspruch 3, wobei der Katalysator Essigsäure ist.

5. Produkt nach Anspruch 1, wobei bei dem innigen miteinander in Berührung bringen des Polymeren mit mehreren Hydroxylgruppen und des reaktionsfähigen Organosilans ein tertiäres Amin in einer wirksamen Menge als Katalysator verwendet wird.

6. Produkt nach jedem der Ansprüche 1 bis 5, wobei das Polymere mit mehreren Hydroxylgruppen Polyvinylakohol oder ein Copolymeres des Vinylalkohols und das reaktionsfähige Organosilan ein Isocyanatoalkyltrialkoxysilan ist und das Reaktionsprodukt zusätzlich zu substituierenden Hydroxyl- und Acetatresten wenigstens einen Baustein der Formel

   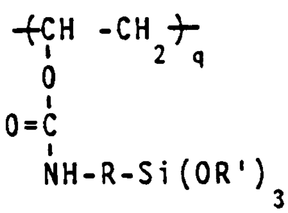

   enthält, in der R eine Alkylgruppe, R' jeweils eine Alkylgruppe oder Wasserstoff bedeutet und q für eine ganze Zahl von 1 bis 3000 steht.

7. Produkt nach jedem der Ansprüche 1 bis 5, wobei das Polymere mit mehreren Hydroxylgruppen Polyvinylalkohol oder ein Copolymeres des Vinylalkohols und das reaktionsfähige Organosilan ein Glycidoxyalkyltrialkoxysilan ist und das Reaktionsprodukt zusätzlich zu substituierenden Hydroxyl- und Acetatgruppen mindestens einen Baustein der Formel

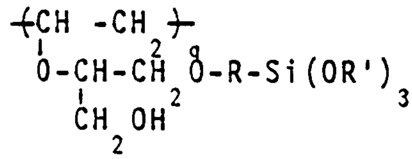

enthält, in der R eine Alkylgruppe, R' jeweils eine Alkylgruppe oder Wasserstoff bedeutet und q für eine ganze Zahl von 1 bis 3000 steht.

**8.** Produkt nach jedem der Ansprüche 1 bis 5, wobei das Polymere mit mehreren Hydroxylgruppen Polyvinylalkohol oder ein Copolymeres des Vinylalkohols und das reaktionsfähige Organosilan ein Ethoxyesteralkyltrialkoxysilan ist und das Reaktionsprodukt zusätzlich zu substituierenden Hydroxyl- und Acetatgruppen mindestens einen Baustein der Formel

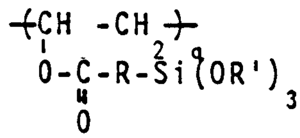

enthält, in der R eine Alkylgruppe, R' jeweils eine Alkylgruppe oder Wasserstoff bedeutet und q für eine ganze Zahl von 1 bis 3000 steht.

**9.** Produkt nach jedem der Ansprüche 1 bis 8, wobei das Polymere mit mehreren Hydroxylgruppen Polyvinylalkohol oder ein Copolymeres des Vinylalkohols mit einem Hydrolysegrad von mindestens 50% ist und das Reaktionsprodukt verbliebene restliche Acetatgruppen aus dem als Ausgangsstoff verwendeten Polymeren mit mehreren Hydroxylgruppen aufweist.

**10.** Produkt nach jedem der Ansprüche 1 bis 9, wobei das Polymere mit mehreren Hydroxylgruppen Polyvinylalkohol oder ein Copolymeres des Vinylalkohols ist und das Reaktionsprodukt, bezogen auf die Zahl der substituierende Gruppen, weniger als etwa 50% organisch gebundene Silane mit reaktionsfähigen Alkoxy- und/oder Hydroxlgruppen aufweist.

**11.** Produkt nach Anspruch 10, wobei der Prozentgehalt der organisch gebundenen Silane bis zu 2 Molprozent beträgt.

**12.** Produkt nach jedem der Ansprüche 1 bis 11, wobei das Reaktionsprodukt das Infrarotspektrum der Figur 1, Kurve A aufweist

**13.** Produkt nach jedem der Ansprüche 1 bis 12, wobei die Temperatur von Raumtemperatur bis 80 ° C beträgt.

**14.** Produkt nach jedem der Ansprüche 1 bis 5, wobei das wasserlösliche Kohlenhydrat ausgewählt wird aus der Gruppe bestehend aus Stärke und deren veretherten, veresterten und kationisierten Derivaten.

**15.** Verwendung eines wässerigen Gemisches eines nicht gelierten Reaktionsproduktes nach jedem der Ansprüche 1 bis 14 für die Behandlung von Hydroxylgruppen enthaltenden Substraten.

**16.** Hydroxylgruppen enthaltende Substrate, die mit dem trockenen Rückstand einer wässerigen Mischung eines nicht gelierten Reaktionsproduktes nach jedem der Ansprüche 1 bis 14 beschichtet sind.

**17.** Verfahren zur Herstellung eines wässerigen Gemisches eines nicht gelierten Reaktionsproduktes eines Polymeren mit mehreren Hydroxylgruppen und eines reaktionsfähigen Organosilans, dadurch gekennzeichnet, daß man innig miteinander in Berührung bringt

A. ein Polymeres mit mehreren Hydroxylgruppen, die als eine Vielzahl von Substituenten vorhanden und die die vorwiegend vorhandenen Substituenten sind, ausgewählt aus der Gruppe bestehend aus Polyvinylalkohol , Copolymeren des Vinylalkohols und wasserlöslichen Kohlenhydraten, und

B. ein reaktionsfähiges Organosilan mit bis zu 3 Substituenten, ausgewählt aus der Gruppe bestehend aus Isocyanatoalkyl-, Isocyanatoaryl- und Isocyanatoaralkyl-Resten, wobei die Isocyanatgruppen jeweils verkappt oder unverkappt sind, aus Estergruppen enthaltenden Alkyl-, Aryl- und Aralkylresten sowie, sofern das Polymere mit mehreren Hydroxylgruppen Polyvinylalkohol oder ein Copolymeres des Vinylalkohols ist, aus Glycidoxyalkyl-, Glycidoxyaryl- und Glycidoxyaralkyl-Resten,

wobei das genannte wässerige Gemisch des genannten Reaktionsproduktes durch inniges in Berührung bringen des Polymeren mit mehreren Hydroxylgruppen und des reaktionsfähigen Silans entsteht, das Polymere mit mehreren Hydroxylgruppen als wässerige Lösung, Emulsion oder Dispersion mit etwa 5 bis etwa 40 Gewichtsprozent Feststoffgehalt eingesetzt wird, das reaktionsfähige Organosilan in einer solchen Menge verwendet wird, daß wenigstens eine und bis zu 50% der substituierenden Hydroxylgruppen des Polymeren mit mehreren Hydroxylgruppen umgesetzt werden und wobei das innige miteinander in Berührung bringen bei einem pH-Wert von bis zu etwa 4 bis 9 oder höher und bei einer Temperatur zwischen Raumtemperatur und erhöhten Temperaturen von weniger als etwa 100 ° C stattfindet, so daß eine wässerige Mischung des nicht gelierten Reaktionsproduktes entsteht.

**18.** Verfahren nach Anspruch 17, wobei man das wässerige Gemisch des nicht gelierten Reaktionsproduktes auf ein Hydroxylgruppen enthaltendes Substrat aufbringt und den Wassergehalt des Gemisches vermindert, so daß eine Beschichtung entsteht.

## Revendications

**1.** Mélange aqueux d'un produit d'interréaction, non gélifié, comprenant

A. un polymère polyhydroxylé dont l'hydroxylation est présente sous forme d'une multiplicité de constituants pendants, où les constituants du type hydroxyle pendants sont les constituants pendants prédominants, choisis dans le groupe formé par le poly(alcool vinylique) et les copolymères de celui-ci et les hydrates de carbone solubles dans l'eau et

B. un organosilane réactif qui comporte jusqu'à 3 radicaux choisis parmi les radicaux alcoxy, aryloxy, hydroxyle ou leurs mélanges, attachés au silane et possédant des radicaux organiques réactifs, choisis dans le groupe formé par les radicaux isocyanatoalkyle, isocyanatoaryle, isocyanatoaralkyle, où les radicaux isocyanato sont coiffés ou non coiffés, les radicaux aralkyle, aryle, alkyle, contenant les groupes ester et où le polymère polyhydroxylé est le poly(alcool vinylique) ou un copolymère de celui-ci, un glycidoxyalkyle, un glycidoxyaryle et un glycidoxyaralkyle,

le mélange aqueux précité du produit d'interréaction susmentionné étant formé en mettant intimement en contact le polymère polyhydroxylé et l'organosilane réactif, le polymère polyhydroxylé étant appliqué sous forme d'une dispersion, d'une émulsion ou d'une solution, aqueuse, contenant environ 5 à environ 40% en poids de ce polymère et l'organosilane étant utilisé en une proportion telle qu'au moins 1 et jusqu'à moins d'environ 50% du nombre de constituants hydroxyle pendants sur le polymère polyhydroxylé aient réagi, la mise en contact intime étant réalisée à un pH allant jusqu'à environ 4 ou 9 et plus et à une température qui varie de la température ambiante à des températures élevées inférieures à environ 100 ° C, de manière à produire un mélange aqueux d'un produit d'interréaction non gélifié.

**2.** Procédé suivant la revendication 1, caractérisé en ce que le pH est d'environ 3.

**3.** Procédé suivant la revendication 1 ou la revendication 2, caractérisé en ce que l'on utilise un catalyseur du type acide protique pour la mise en contact intime du polymère polyhydroxylé et de l'organosilane réactif, le catalyseur en question étant présent en une proportion catalytiquement efficace.

**4.** Produit suivant la revendication 3, caractérisé en ce que le catalyseur est constitué par l'acide acétique.

**5.** Produit suivant la revendication 1, caractérisé en ce que l'on utilise un catalyseur du type amine tertiaire, en une proportion catalytiquement efficace, pour la mise en contact intime du polymère polyhydroxylé et de l'organosilane réactif.

**6.** Produit suivant l'une quelconque des revendications 1 à 5, caractérisé en ce que le polymère polyhydroxylé est un polymère de poly(alcool vinylique) ou un copolymère de celui-ci et l'organosilane réactif est un isocyanatoalkyltrialcoxysilane et le produit d'interréaction comporte en plus de groupements acétate et hydroxyle pendants, au moins un groupement répondant à la formule suivante :

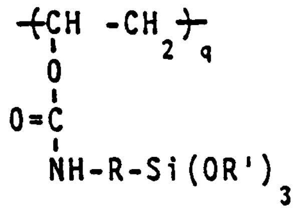

dans laquelle R représente un radical alkyle, R' représente un radical alkyle, un atome d'hydrogène ou un mélange d'entre ces trois radicaux et q représente un nombre entier dont la valeur varie de 1 à 3.000.

**7.** Produit suivant les revendications 1 à 5, caractérisé en ce que le polymère polyhydroxylé est le poly(alcool vinylique) ou un copolymère de celui-ci et l'organosilane réactif est un glycidoxyalkyltrialcoxysilane et le produit d'interréaction possède, en plus de groupements acétate et hydroxyle pendants, au moins un groupement répondant à la formule

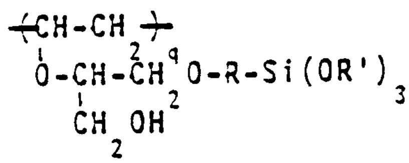

dans laquelle R représente un radical alkyle, R' représente un radical alkyle, un atome d'hydrogène ou un mélange d'entre ces trois radicaux et q représente un nombre entier dont la valeur varie de 1 à 3.000.

**8.** Produit suivant les revendications 1 à 5, caractérisé en ce que le polymère polyhydroxylé est le poly(alcool vinylique) ou un copolymère de celui-ci et l'organosilane réactif est un glycidoxyalkyltrialcoxysilane et le produit d'interréaction possède, en plus de groupements acétate et hydroxyle pendants, au moins un groupement répondant à la formule

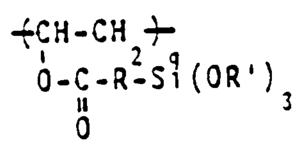

dans laquelle R représente un radical alkyle, R' représente un radical alkyle, un atome d'hydrogène ou un mélange d'entre ces trois radicaux et q représente un nombre entier dont la valeur varie de 1 à 3.000.

**9.** Produit suivant l'une quelconque des revendications 1 à 8, caractérisé en ce que le polymère polyhydroxylé est le poly(alcool vinylique) ou un copolymère de celui-ci, possédant au moins 50% d'hydrolyse et le produit d'interréaction possède des radicaux acétate pendants résiduels provenant du polymère polyhydroxylé de départ.

**10.** Produit suivant l'une quelconque des revendications 1 à 9, caractérisé en ce que le polymère polyhydroxylé est le poly(alcool vinylique) ou un polymère de celui-ci et le produit d'interréaction possède, sur base du nombre de groupes pendants, moins d'environ 50% de radicaux silane organoliés pendants avec des groupes hydroxyle et/ou alcoxy réactifs.

**11.** Produit suviant la revenciation 10, caractérisé en ce que la proportion de radicaux silane organoliés, pendants, présents s'élève jusqu'à 2% molaires.

**12.** Produit suivant l'une quelconque des revendications 1 à 11, caractérisé en ce que le produit d'interréaction possède le spectre infrarouge présenté par la courbe A de la figure 1.

**13.** Produit suivant l'une quelconque des revendications 1 à 12, caractérisé en ce que la plage des températures varie de la température ambiante à 80 ° C.

**14.** Produit suivant l'une quelconque des revendications 1 à 5, caractérisé en ce que l'hydrate de carbone soluble dans l'eau est choisi dans le groupe formé par l'amidon et ses dérivés éthérifiés, estérifiés, oxydés et cationisés.

**15.** Utilisation d'un mélange aqueux du produit d'interréaction non gélifié suivant l'une quelconque des revendications 1 à 14, pour traiter des subjectiles contenant des radicaux hydroxyle.

**16.** Subjectiles contenant des radicaux hydroxyle, revêtus du résidu sec d'un mélange aqueux d'un produit d'interréaction non gélifié suivant l'une quelconque des revendications 1 à 14.

**17.** Procédé de production d'un mélange aqueux d'un produit d'interréaction non gélifié de polymère polyhydroxylé et d'un organosilane réactif, caractérisé en ce que l'on met intimement en contact

A. un polymère polyhydroxylé dont l'hydroxylation est présente sous forme d'une multiplicité de constituants pendants, où les constituants du type hydroxyle pendants sont les constituants pendants prédominants, choisis dans le groupe formé par le poly(alcool vinylique) et les copolymères de celui-ci et les hydrates de carbone solubles dans l'eau et

B. un organosilane réactif qui comporte jusqu'à 3 radicaux choisis parmi les radicaux alcoxy, aryloxy, hydroxyle ou leurs mélanges, attachés au silane et possédant des radicaux organiques réactifs, choisis dans le groupe formé par les radicaux isocyanatoalkyle, isocyanatoaryle, isocyanatoaralkyle, où les radicaux isocyanato sont coiffés ou non coiffés, les radicaux aralkyle, aryle, alkyle, contenant les groupes ester et où le polymère polyhydroxylé est le poly(alcool vinylique) ou un copolymère de celui-ci, un glycidoxyalkyle, un glycidoxyaryle et un glycidoxyaralkyle,

le polymère polyhydroxylé étant appliqué sous forme d'une dispersion, d'une émulsion ou d'une solution, aqueuse, contenant environ 5 à environ 40% en poids de ce polymère et l'organosilane réactif étant utilisé en une proportion telle qu'au moins 1 et jusqu'à moins d'environ 50% du nombre des constituants du type hydroxyle pendants sur le polymère polyhydroxylé aient réagi et la mise en contact intime étant réalisée à un pH allant jusqu'à environ 4 ou 9 ou plus de 9 et à une température qui varie de la température ambiante à des températures élevées inférieures à environ 100 ° C, de manière à produire un mélange aqueux du produit d'interréaction non gélifié.

**18.** Procédé suivant la revendication 17, caractérisé en ce que l'on applique le mélange aqueux du produit d'interréaction gélifié sur un subjectile contenant des radicaux hydroxyle et on réduit la teneur en humidité du mélange pour former un revêtement.

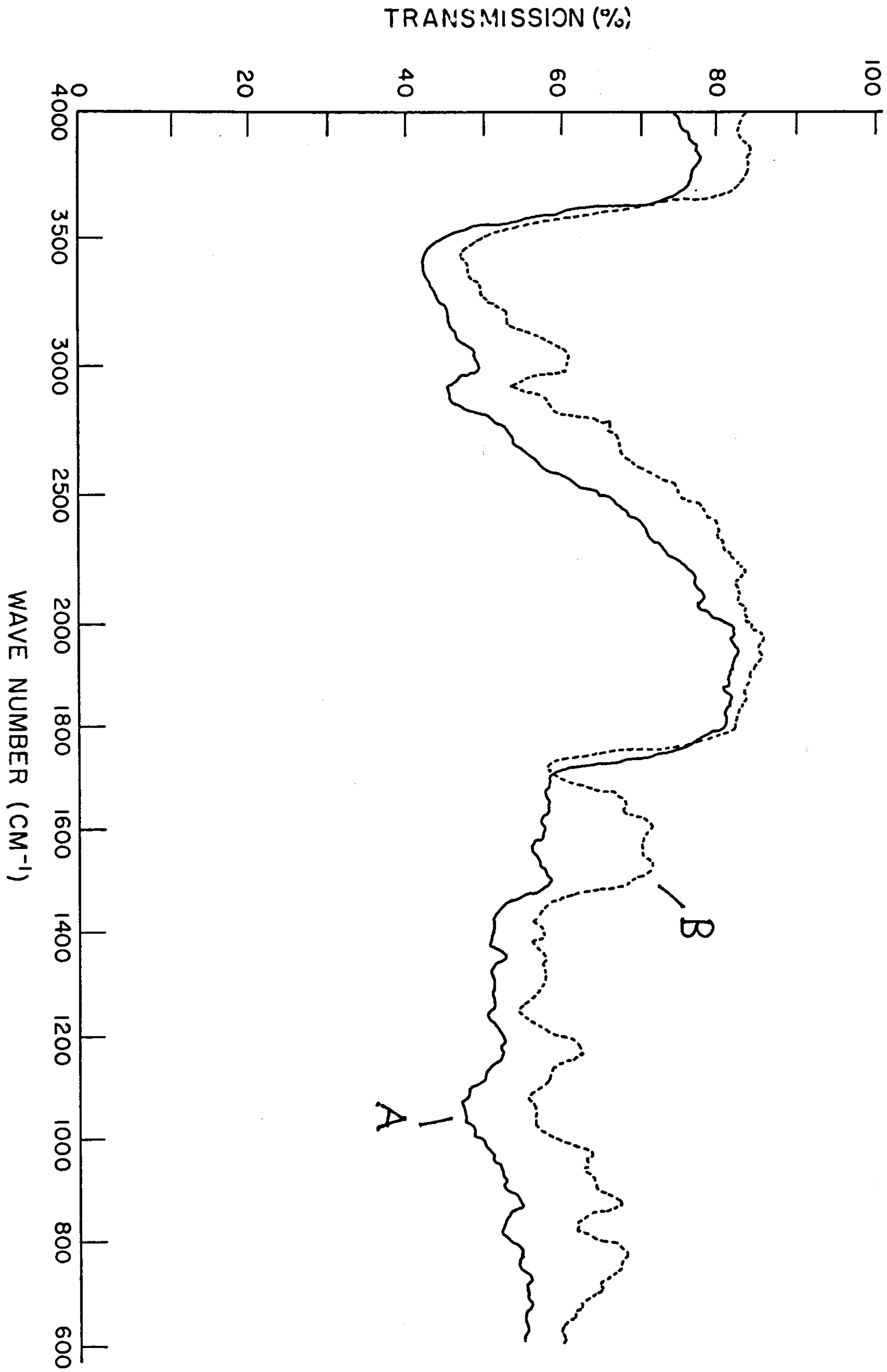
TRANSMISSION (%)
0
20
40
60
80
100
4000
3500
3000
2500
2000
1800
1600
1400
1200
1000
800
600
WAVE NUMBER (CM⁻¹)
A
B

FIG. 1

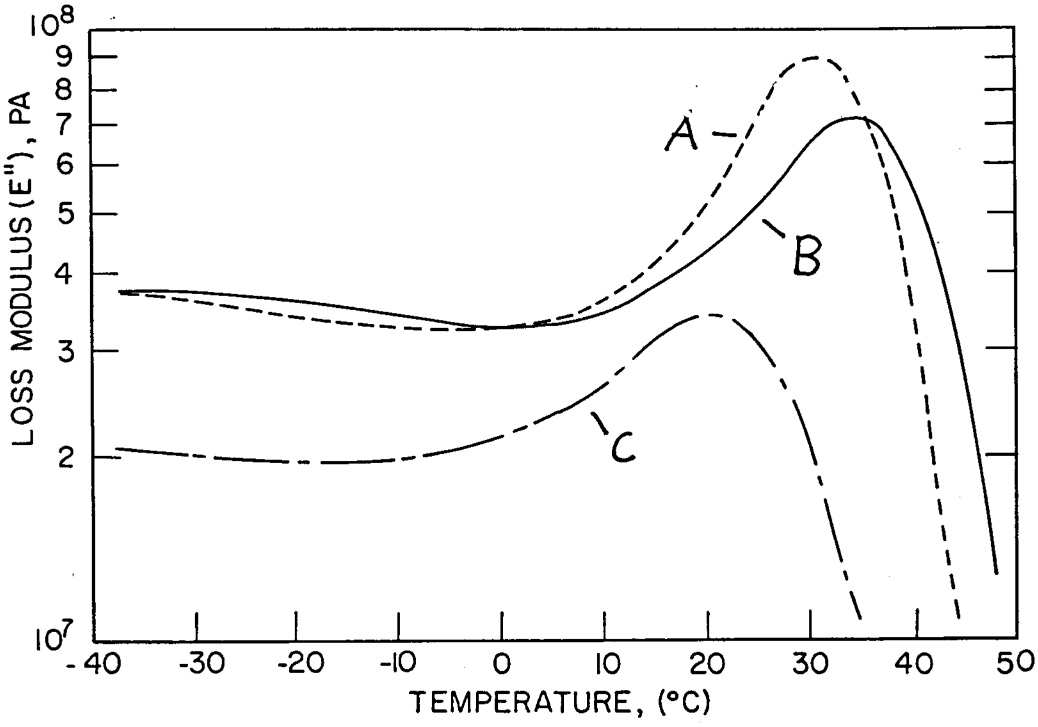
10⁸
9
8
7
6
5
4
3
2
10⁷
LOSS MODULUS (E"), PA
A
B
C
-40
-30
-20
-10
0
10
20
30
40
50
TEMPERATURE, (°C)

FIG. 2

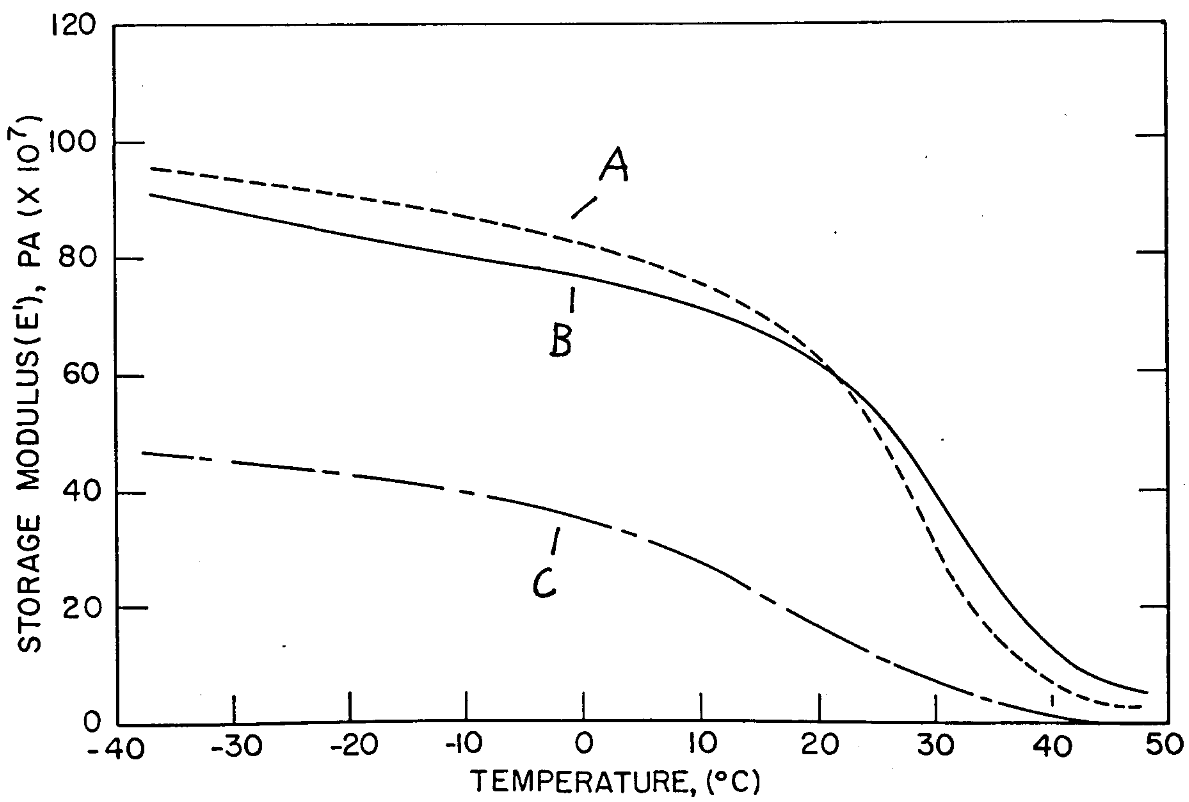
120
100
80
60
40
20
0
STORAGE MODULUS (E'), PA (X 10⁷)
A
B
C
-40
-30
-20
-10
0
10
20
30
40
50
TEMPERATURE, (°C)

FIG. 3

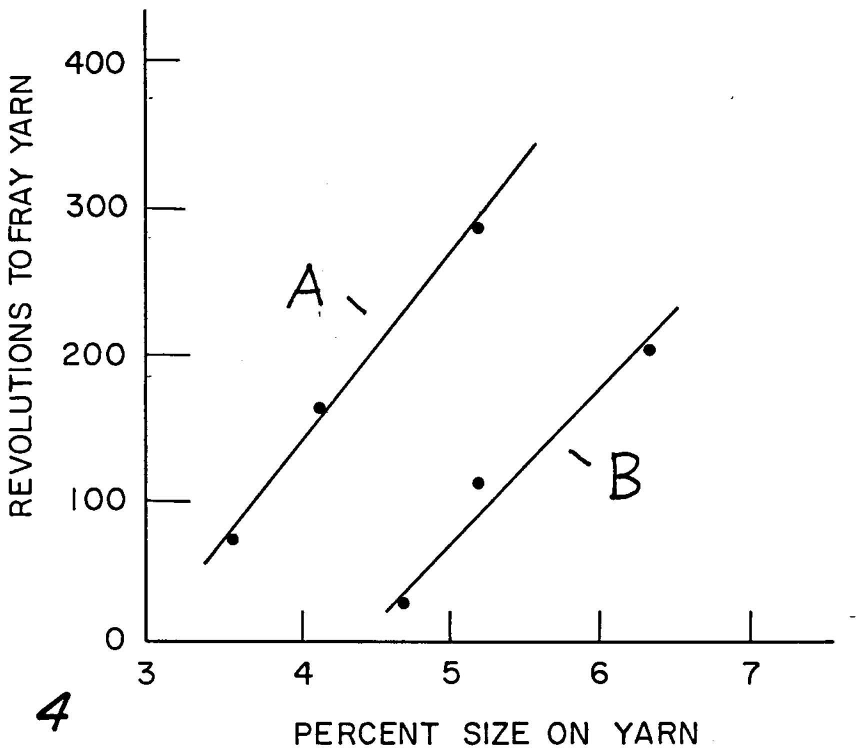
REVOLUTIONS TO FRAY YARN
400
300
200
100
0
3
4
5
6
7
A
B
PERCENT SIZE ON YARN

FIG. 4

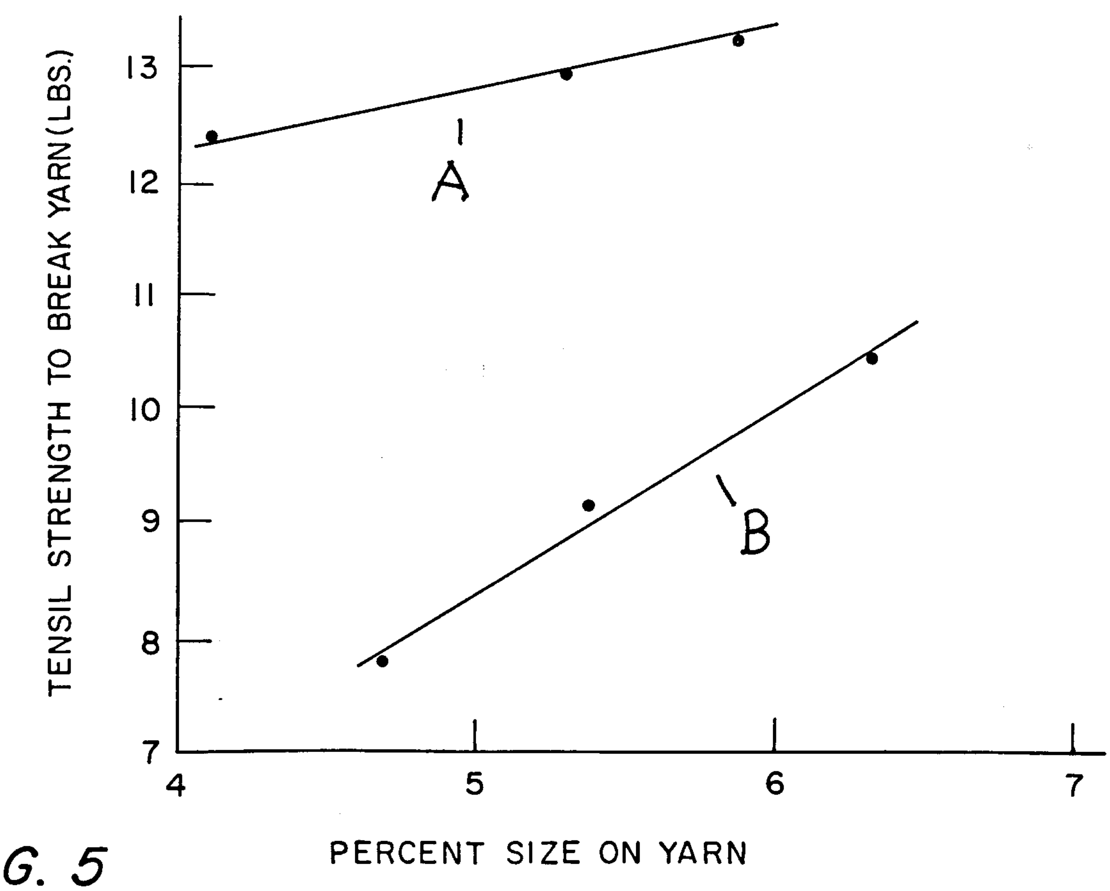
TENSIL STRENGTH TO BREAK YARN (LBS.)
13
12
11
10
9
8
7
4
5
6
7
A
B
PERCENT SIZE ON YARN

FIG. 5